# EUROPÄISCHE PATENTSCHRIFT

(11) **EP 4 286 596 B1**
(45) Veröffentlichungstag und Bekanntmachung des Hinweises auf die Patenterteilung: **19.02.2025**
(21) Anmeldenummer: 23166774.2
(22) Anmeldetag: 05.04.2023
(51) Int. Cl.: E02D 29/12, H02G 9/10

(54) **SCHACHT**
SHAFT
PUITS

(30) Priorität: 03.06.2022 DE 102022114132
(43) Veröffentlichungstag der Anmeldung: 06.12.2023
(73) Patentinhaber: Langmatz GmbH, 82467 Garmisch-Partenkirchen (DE)
(72) Erfinder: Straßberger, Thomas, 82491 Grainau (DE)
(74) Vertreter: Flosdorff, Jürgen

(56) Entgegenhaltungen:
- EP-A1- 1 587 199
- DE-A1- 102011 116 874
- DE-B3- 10 314 897
- DE-U1- 202007 014 465

## Beschreibung

Die Erfindung betrifft einen Schacht, dessen Schachtwände aus aufeinander aufgesetzten Wandelementen bestehen, die im Spritzgussverfahren aus Kunststoff hergestellt sind, entsprechend dem Oberbegriff des Anspruchs 1.

Meist werden zwei oder drei Reihen von Wandelementen übereinander angeordnet, wobei für das oberste Wandelement verschiedene Höhenabmessungen bereit gehalten werden können, damit die Oberseite des Schachtes möglichst nahe an das Umgebungsniveau heranreicht. Der obere Abschluss der so gebildeten Schachtwände enthält einen Stahlrahmen, der meist ein umlaufendes Rechteckprofil ist, auf dem ein oder mehrere Schachtdeckel angeordnet werden, die von einem außen an dem Stahlrahmen befestigten Flachstahl umfasst sind.

Die Oberkante des Flachstahls und die Oberseite des oder der Schachtdeckel müssen bei fertiggestelltem Schacht auf derselben Höhe wie die Umgebung des Schachtes liegen, da ein derartiger Schacht üblicherweise begehbar und befahrbar ist. Zur Höheneinstellung des oberen Abschlusses des Schachtes ist es bekannt, dass sich der Stahlrahmen auf Spindeln abstützen kann, deren Länge so eingestellt wird, dass der oder die Schachtdeckel exakt auf Umgebungsniveau liegen.

Da der oder die Schachtdeckel großen mechanischen Belastungen ausgesetzt sein können, muss der obere Abschluss des Schachtes eine ausreichend große Stabilität aufweisen.

Aus der DE 103 14 897 B3 und der EP 1 587 199 A1 sind Systeme zur Unterbringung von Verteilereinrichtungen von Kupfer- und/oder Glasfaserkabeln bekannt, bei denen die in den Boden eingebauten Schächte aus mehreren aus Kunststoff bestehenden Schachtwänden zusammengesetzt sind, deren oberer Abschluss einen Stahlrahmen aufweist, auf dem ein oder mehrere Schachtdeckel angeordnet werden. Auch die DE 20 2007 014 465 U offenbart einen Unterflurschacht, bei dem die Rahmenelemente vor dem Einlassen des Unterflurschachtes in den Boden zusammengesetzt werden.

Der vorliegenden Erfindung liegt die Aufgabe zugrunde, einen Schacht der eingangs genannten Art anzugeben, bei dem im Falle eines Höhenausgleichs mit ausgefahrenen Spindeln überprüfbar ist, ob die zugehörigen Maßnahmen korrekt ausgeführt sind. Insbesondere soll überprüfbar sein, ob alle Spindeln korrekt ausgefahren sind und ob der eingebrachte dünnflüssige Mörtel zur Unterfütterung des angehobenen Stahlrahmens ausreicht.

Diese Aufgabe wird erfindungsgemäß durch die Merkmale des Patentanspruchs 1 gelöst.

Vorteilhafte Ausgestaltungen der Erfindung sind in den Unteransprüchen gekennzeichnet.

Die Erfindung sieht vor, dass auf der Oberseite der Schachtwände ein Kopfrahmen befestigt ist, der einen plattenförmigen Abschnitt, der auf den Schachtwänden aufliegt, und einen in der Einbaulage nach oben abgewinkelten Schalungsabschnitt aufweist, der in der Einbaulage an der Innenseite der Schachtwände angeordnet ist. Der Stahlrahmen hat an jedem Eckbereich jeweils eine Spindel, die zum Höhenausgleich des Stahlrahmens ausfahrbar ist, so dass der Stahlrahmen entweder direkt auf dem Kopfrahmen oder auf ausgefahrenen Spindeln und einer auf dem Kopfrahmen angeordneten unterfütternden Mörtelschicht aufliegt. Weiter ist erfindungsgemäß vorgesehen, dass im Bereich der Spindeln jeweils eine Aussparung in dem Schalungsabschnitt des Kopfrahmens ausgebildet ist, in der ein Sichtfenster angeordnet ist, das abgenommen werden kann, um den Bereich der Spindel visuell kontrollieren zu können.

Durch diese Aussparung ist bei abgenommenem Sichtfenster von der Innenseite des Schachtes aus zu sehen, ob alle Spindeln korrekt ausgefahren sind, und ob der eingebrachte dünnflüssige Mörtel eine ausreichende Höhe erreicht, um den Stahlrahmen zu unterfüttern und damit stabil abzustützen.

Dabei ist bevorzugt, dass das plattenförmige, abnehmbare Sichtfenster am Rand Mittel z.B. in Form von Haken hat, mit denen das Sichtfenster am Rand der Fensteröffnung befestigt werden kann.

Das Sichtfenster kann auch aus einem durchsichtigen Material bestehen, so dass es zur Kontrolle nicht abgenommen werden muss.

Der vorzugsweise im Winkel von 90° an dem plattenförmigen Abschnitt anschließende Schalungsabschnitt verhindert zuverlässig, dass der dünnflüssige Mörtel teilweise ins Innere des Schachtes abläuft.

Nach einem weiteren Vorschlag der Erfindung kann auch vorgesehen sein, dass an der gegenüberliegenden Seite der Schachtwand eine umlaufende Außenschalung mit Clipsen befestigt wird, die auch dort ein Ablaufen des Mörtels verhindert. Hierdurch lassen sich die Einbaukosten des Schachtes senken.

Der Kopfrahmen kann aus mehreren Kopfrahmenteilen zusammengesetzt sein, die an den Ecken des in der Regel rechteckigen Schachtes aneinander anliegen oder ineinander eingreifen. Die einzelnen Kopfrahmenteile können an einem seitlichen Randabschnitt Haken aufweisen, die in die zugehörigen Schachtwände eingeschoben werden, um die Kopfrahmenteile zunächst auf den Schachtwänden korrekt zu positionieren. An dem gegenüberliegenden Rand können die Kopfrahmenteile Rastnasen aufweisen, die in Aussparungen der Schachtwände einrasten, womit der gesamte Kopfrahmen unbeweglich auf der Oberseite der Schachtwände fixiert ist.

Der Kopfrahmen kann vorteilhafterweise im Bereich der Sichtfenster jeweils eine Aufnahme für ein Auflageblech aufweisen, auf dem sich eine ausgefahrene Spindel abstützt. Die Auflagebleche halten einem großen Auflagedruck stand, der durch Verkehrslast auf dem Schachtdeckel hervorgerufen werden kann.

Der Kopfrahmen wird bevorzugt einstückig im Kunststoffspritzgussverfahren, vorzugsweise aus PC, hergestellt. Es liegt aber auch im Rahmen der Erfindung, dass der plattenförmige Abschnitt und der Schalungsabschnitt des Kopfrahmens als getrennt hergestellte Bauteile auf geeignete Weise zusammengesetzt sein können.

Weitere Einzelheiten der Erfindung ergeben sich aus der nachfolgenden Beschreibung einer bevorzugten Ausführungsform sowie anhand der Zeichnungen. Dabei zeigen:
- Figur 1: eine perspektivische Ansicht eines kompletten Schachtes;
- Figur 2: zwei Darstellungen der Montage eines Kopfrahmens;
- Figur 3: ein Kopfrahmenteil mit Haken zur Positionierung und Rastnasen zur Fixierung;
- Figur 4: die Montage eines Sichtfensters;
- Figuren 5A bis 5D: eine Rückansicht, eine Seitenansicht, eine Stirnansicht und eine perspektivische Ansicht eines Sichtfensters;
- Figur 6: eine Schnittdarstellung des oberen Abschlusses eines Schachtes mit einem Sichtfenster;
- Figur 7: eine Prinzipdarstellung des Ausgleichs auf Umgebungsniveau;
- Figur 8: die Montage einer Außenschalung am oberen Rand der Schachtwand.

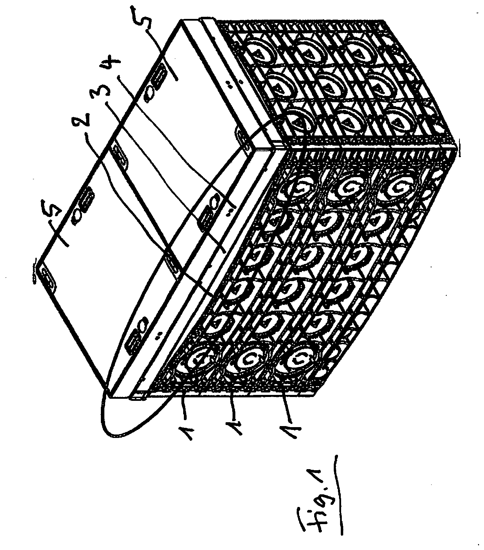

Figur 1 zeigt eine perspektivische Ansicht eines Schachtes, dessen Schachtwände aus drei aufeinandergesetzten Wandelementen 1 bestehen. Den oberen Abschluss des Schachtes bilden ein Kopfrahmen 2 und ein darüber angeordneter Stahlrahmen 3, auf dem ein umlaufender Flachstahl 4 befestigt ist, in dem zwei Schachtdeckel 5 bündig angeordnet sind.

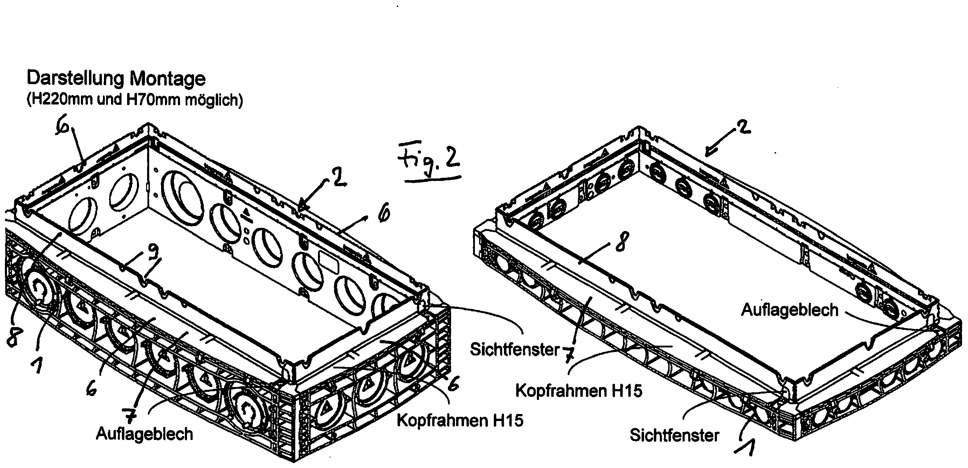

Figur 2 zeigt einen Kopfrahmen 2, der auf der Oberseite von zwei Wandelementen 1 unterschiedlicher Höhe befestigt ist. Der Kopfrahmen 2 besteht aus vier Kopfrahmenteilen 6, die an den Ecken des rechteckigen Schachtes zusammengefügt sind. Die Kopfrahmenteile 6 bestehen aus einem im wesentlichen plattenförmigen Abschnitt 7, der auf der zugehörigen Schachtwand befestigt ist, und einem rechtwinklig nach oben abgewinkelten Schalungsabschnitt 8, der der Innenseite des Schachtes zugewandt ist. In dem oberen Randbereich des Schalungsabschnitts 8 sind Aussparungen 9 ausgebildet, in die Verriegelungsbolzen der Schachtdeckel eintreten können. Die Aussparungen 9 sind durch aufgesteckte Verschlussplatten lösbar verschließbar (nicht dargestellt).

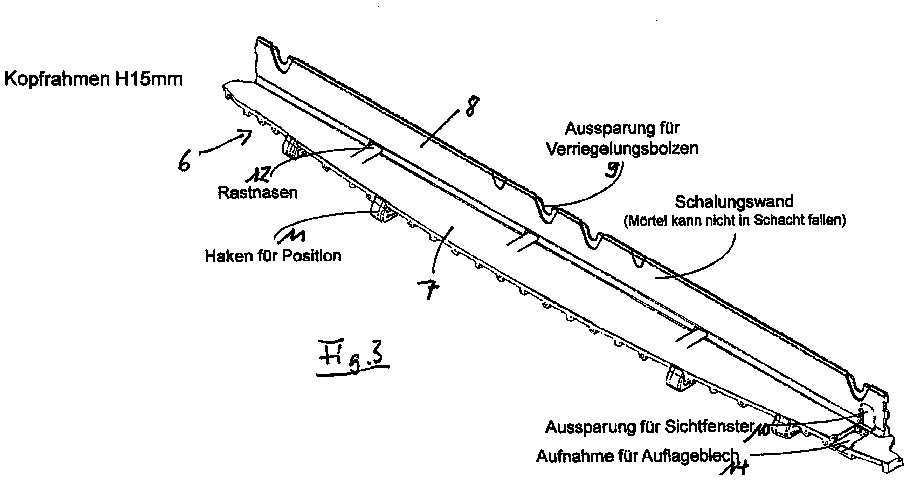

In Figur 3 ist ein Kopfrahmenteil 6 abgebildet, der ohne Zuhilfenahme von Werkzeugen auf der Oberseite einer Schachtwand befestigbar ist. Hierzu ist der Kopfrahmenteil 6 mit Haken 11 und Rastnasen 12 versehen. Die Haken 11 bilden Klemm-Mittel, die von der Außenseite des Schachtes aus in die Schachtwand eingeschoben werden, um den Kopfrahmenteil 6 zunächst korrekt auf der Oberseite der Schachtwand zu positionieren. Die Rastnasen 12 greifen an der Innenseite des Schachtes in Aussparungen der Schachtwand ein, wobei durch diese Verrastung der Kopfrahmenteil 6 bzw. der gesamte Kopfrahmen 2 unverschieblich auf der Schachtwand fixiert ist.

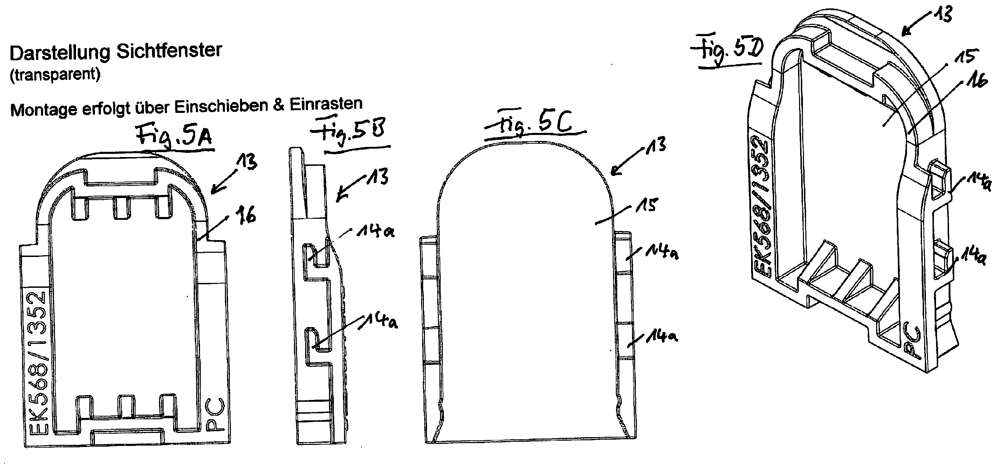

Im rechten Endbereich des Kopfrahmenteils 6 bzw. im Eckbereich des Kopfrahmens 2 ist in der Schalungswand 8 eine Aussparung 10 ausgebildet, in die ein abnehmbares Sichtfenster 13 durch Einschieben und Einrasten einsetzbar ist. Das Sichtfenster ist in mehreren Ansichten in den Figuren 5A bis 5C dargestellt. An einer mit der Aussparung 10 für das Sichtfenster 13 fluchtenden Stelle ist in dem plattenförmigen Abschnitt 7 des Kopfrahmens 2 eine Einsenkung 14 ausgebildet, in die ein Auflageblech 18 eingesetzt wird, auf dem sich eine weiter unten beschriebene Spindel zum Höhenausgleich des Stahlrahmens 3 abstützt.

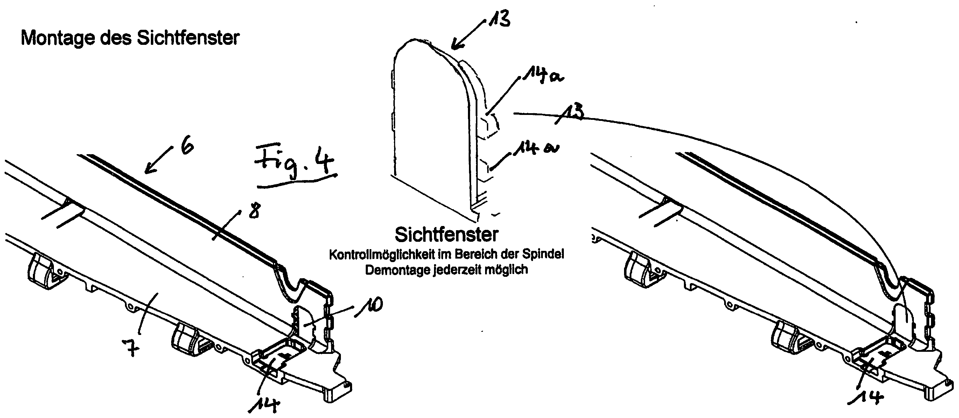

In Figur 4 ist in der linken Abbildung die Aussparung 10 in der Schalungswand 8 ohne Sichtfenster 13 abgebildet, wobei am Rand der Aussparung 10 Mittel zur Aufnahme von Haken 14a, die am Rand des Sichtfensters 13 ausgebildet sind, angedeutet sind. Die Montage des Sichtfensters 13 erfolgt durch Einschieben des Sichtfensters 13 und Verrasten mittels der Haken 14a. In der rechten Abbildung der Figur 4 ist das Sichtfenster 13 im eingesetzten Zustand dargestellt.

In Figur 5 sind Einzelheiten des Sichtfensters dargestellt, das eine glatte geschlossene Fläche 15 enthält, deren Rand von einem umlaufenden Rahmen 16 verstärkt ist, an dem seitlich über die Fläche 15 hinaus vorstehende Haken 14a angeformt sind.

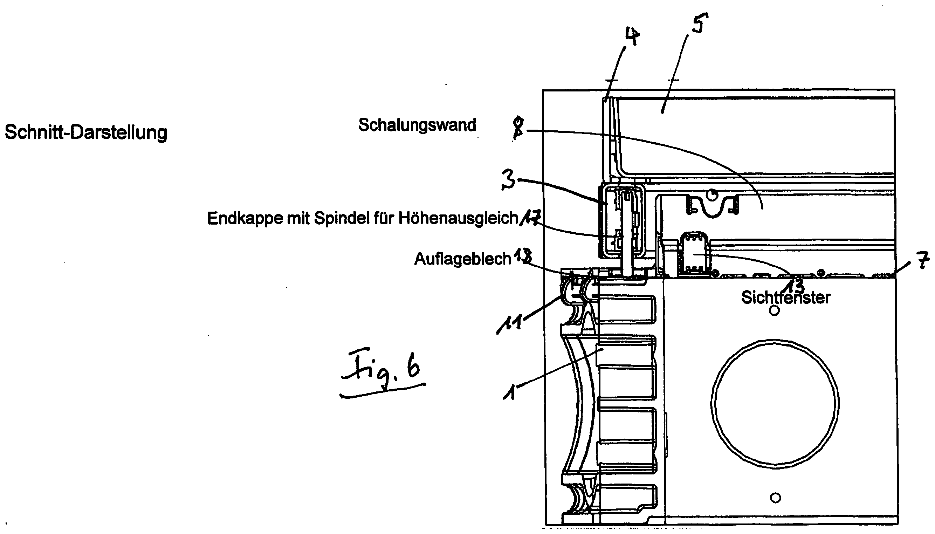

Figur 6 zeigt einen Vertikalschnitt durch den oberen Abschluss eines Schachtes mit dem oberen Wandelement 1. Auf der Oberseite des Wandelements 1 ist der Kopfrahmen befestigt, indem die Haken 11 des plattenförmigen Abschnitts 7 des Kopfrahmens 2 klemmend in das Wandelement 1 eingeschoben sind. In dem Stahlrahmen 3 befindet sich eine Endkappe mit einer Spindel 17, die in der Darstellung der Figur 6 zum Höhenausgleich nach unten ausgefahren ist und sich auf einem in der Einsenkung 14 angeordneten Auflageblech 18 abstützt. Hierdurch wird der Stahlrahmen 3 angehoben, und zwar soweit, dass die Oberseite des auf dem Stahlrahmen 3 angeordneten Schachtdeckels 5 und die Oberkante des den Deckel 5 umgebenden Stahlblechs 4 mit dem Umgebungsniveau übereinstimmen.

Der hierdurch entstandene Zwischenraum zwischen der Unterkante des Stahlrahmens 3 und dem plattenförmigen Abschnitt 7 des Kopfrahmens 2 muss mit eingebrachtem Mörtel ausgefüllt werden.

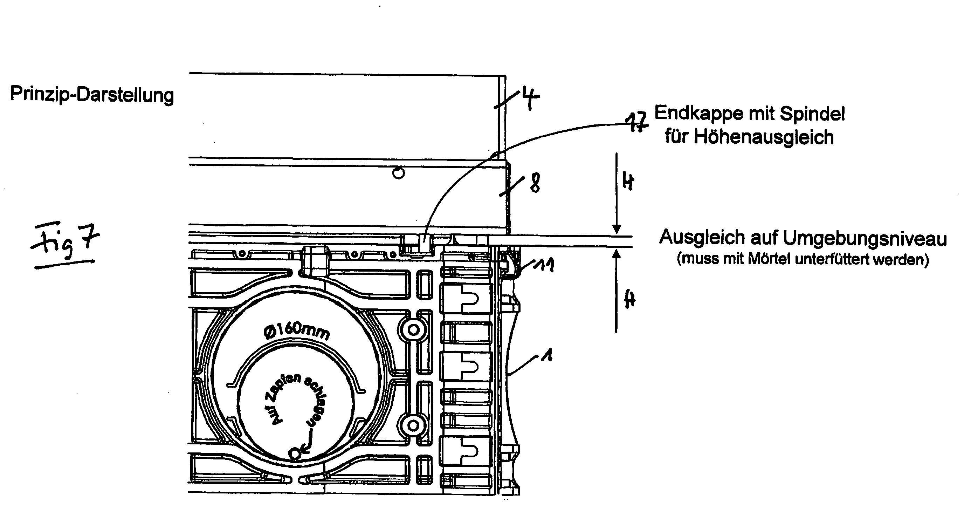

Figur 6 zeigt außerdem ein Sichtfenster 13 in dem um 90° versetzten Kopfrahmenteil 6, das abgenommen wird, um den Bereich der um 90° versetzten Spindel kontrollieren zu können. Die Prinzipdarstellung der Figur 7 zeigt den durch Abnahme eines Sichtfensters freigegebenen Blick auf eine Spindel 17. Der Ausgleich auf Umgebungsniveau ist durch zwei Pfeile H angedeutet, wobei dieser Zwischenraum mit Mörtel gefüllt wird.

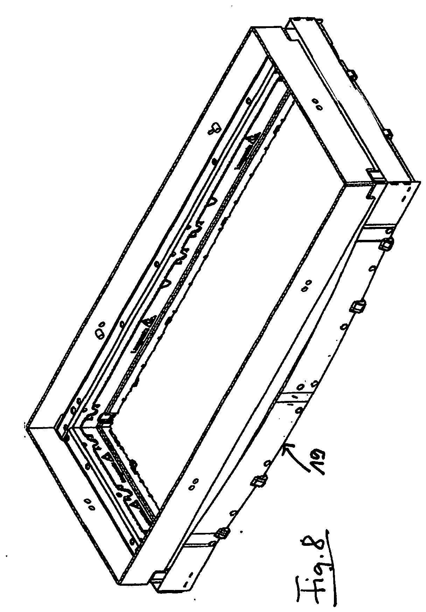

In Figur 8 ist eine umlaufende Außenschalung 19 dargestellt, die die innere Schalungswand 8 ergänzt, so dass zu keiner Seite Mörtel entweichen kann. Die Montage der Außenschalung 19 erfolgt über das Zusammenstecken der einzelnen Blechteile und durch Fixieren der gesamten Außenschalung über sogenannte Tannenbaum-Clipse am oberen Endbereich des Wandelementes 1.

## Patentansprüche

1. Schacht, der aus mehreren aus Kunststoff bestehenden Schachtwänden (1) zusammengesetzt ist, deren oberer Abschluss einen Stahlrahmen (3) aufweist, auf dem ein oder mehrere Schachtdeckel (5) angeordnet sind,
**dadurch gekennzeichnet,**
**dass** auf der Oberseite der Schachtwände (1) ein Kopfrahmen (2) befestigt ist,
**dass** der Kopfrahmen (2) einen Bereich (7), der auf den Schachtwänden (1) aufliegt, und einen in der Einbaulage nach oben abgewinkelten Schalungsabschnitt (8) aufweist, der in der Einbaulage an der Innenseite der Schachtwände (1) angeordnet ist,
**dass** der Stahlrahmen (3) an jedem Eckbereich jeweils eine Spindel (17) aufweist, die zum Höhenausgleich des Stahlrahmens (3) ausfahrbar ist, so dass der Stahlrahmen (3) entweder direkt auf dem Kopfrahmen (2) oder auf ausgefahrenen Spindeln (17) und auf einer auf dem Kopfrahmen (2) angeordneten unterfütternden Mörtelschicht aufliegt,
und **dass** an jedem Eckbereich jeweils eine Aussparung (10) in dem Schalungsabschnitt (8) des Kopfrahmens (2) ausgebildet ist, in der ein Sichtfenster (13) angeordnet ist, das vorzugsweise abnehmbar ist, um die korrekte Ausführung des Einbaus des Stahlrahmens (3) visuell kontrollieren zu können.

2. Schacht nach Anspruch 1,
**dadurch gekennzeichnet,**
**dass** die Sichtfenster (13) Mittel (14a) zum Einschieben und Einrasten in den zugehörigen Aussparungen (10) aufweisen.

3. Schacht nach einem der Ansprüche 1 oder 2,
**dadurch gekennzeichnet,**
**dass** der Kopfrahmen (2) im Bereich der Sichtfenster (13) jeweils eine Aufnahme (14) für ein Auflageblech (18) aufweist, auf dem sich eine ausgefahrene Spindel (17) abstützt.

4. Schacht nach einem der Ansprüche 1 bis 3,
**dadurch gekennzeichnet,**
**dass** der Kopfrahmen (2) aus mehreren Kopfrahmenteilen (6) zusammengesetzt ist.

5. Schacht nach einem der Ansprüche 1 bis 4,
**dadurch gekennzeichnet,**
**dass** eine umlaufende Außenschalung (19) mit Clipsen außen an der Schachtwand (1) anbringbar ist.

6. Schacht nach einem der Ansprüche 1 bis 5,
**dadurch gekennzeichnet,**
**dass** der plattenförmige Abschnitt (7) und der Schalungsabschnitt (8) des Kopfrahmens (2) einstückig im Kunststoffspritzgussverfahren hergestellt sind.

## Claims

1. A shaft, which is composed of a plurality of shaft walls (1) consisting of plastic material, the upper end of which has a steel frame (3), arranged on which are one or more shaft covers (5), **characterised in that** fastened on the upper side of the shaft walls (1) there is a head frame (2), that the head frame (2) includes a region (7), which rests on the shaft walls (1), and a casing section (8), which is bent upwardly, in the installed position, which is arranged, in the installed position, on the inner side of the shaft walls (1), that the steel frame (3) includes a respective spindle (17) at each corner region, which is extendable for height adjustment of the steel frame (3) so that the steel frame (3) rests either directly on the head frame (2) or on extended spindles (17) and on a supporting layer of mortar arranged on the head frame (2), and that formed at each corner region there is a respective opening (10) in the casing section (8) of the head frame (2), arranged in which there is a viewing window (13), which is preferably removable, in order to be able visually to monitor the correct performance of the installation of the steel frame (3).

2. A shaft as claimed in Claim 1, **characterised in that** the viewing windows (13) include means (14a) for sliding into and locking in the associated openings (10).

3. A shaft as claimed in one of Claims 1 or 2, **characterised in that** in the region of the viewing windows (13) the head frame (2) has a respective mounting (14) for a support plate (18), on which an extended spindle (17) bears.

4. A shaft as claimed in one of Claims 1 to 3, **characterised in that** the head frame (2) is composed of a plurality of head frame portions (6).

5. A shaft as claimed in one of Claims 1 to 4, **characterised in that** a peripheral outer casing (19) is mountable externally on the shaft wall (1) with clips.

6. A shaft as claimed in one of Claims 1 to 5, **characterised in that** the plate-shaped section (7) and the casing section (8) of the head frame (2) are manufactured integrally in a plastic injection moulding process.

## Revendications

1. Puits, qui est composé de plusieurs parois de puits (1) constituées de matière plastique, dont la terminaison supérieure présente un cadre en acier (3) sur lequel sont disposés un ou plusieurs couvercles de puits (5), **caractérisé en ce**
**qu'**un cadre de tête (2) est fixé sur la face supérieure des parois de puits (1),
**que** le cadre de tête (2) présente une zone (7), qui repose sur les parois de puits (1), et une section de coffrage (8) inclinée vers le haut dans la position de montage qui dans la position de montage est disposée sur la face intérieure des parois de puits (1),
**que** le cadre en acier (3) présente sur chaque zone d'angle respectivement une broche (17), qui est déployable pour compenser la hauteur du cadre en acier (3), de sorte que le cadre en acier (3) repose soit directement sur le cadre de tête (2) soit sur des broches (17) déployées et sur une couche de mortier de rembourrage disposée sur le cadre de tête (2),
et **que** sur chaque zone d'angle, un évidement (10) est respectivement réalisé dans la section de coffrage (8) du cadre de tête (2), dans lequel est disposée une fenêtre d'inspection (13), qui est de préférence amovible, afin de pouvoir contrôler visuellement la réalisation correcte du montage du cadre en acier (3).

2. Puits selon la revendication 1,
**caractérisé en ce**
**que** les fenêtres d'inspection (13) présentent des moyens (14a) pour l'insertion et l'encliquetage dans les évidements (10) correspondants.

3. Puits selon l'une quelconque des revendications 1 ou 2,
**caractérisé en ce**
**que** le cadre de tête (2) présente dans la zone des fenêtres d'inspection (13) respectivement un logement (14) pour une tôle d'appui (18) sur laquelle s'appuie une broche (17) déployée.

4. Puits selon l'une quelconque des revendications 1 à 3,
**caractérisé en ce**
**que** le cadre de tête (2) est composé de plusieurs parties de cadre de tête (6).

5. Puits selon l'une quelconque des revendications 1 à 4,
**caractérisé en ce**
**qu'**un coffrage extérieur périphérique (19) avec clips peut être fixé à l'extérieur sur la paroi de puits (1).

6. Puits selon l'une quelconque des revendications 1 à 5,
**caractérisé en ce**
**que** la section en forme de plaque (7) et la section de coffrage (8) du cadre de tête (2) sont fabriquées d'une seule pièce dans le procédé de moulage par injection de plastique.
